# EUROPEAN PATENT SPECIFICATION

(11) **EP 3 936 679 B1**
(45) Date of publication and mention of the grant of the patent: **30.04.2025**
(21) Application number: 21184500.3
(22) Date of filing: 08.07.2021
(51) Int. Cl.: E04D 13/147

(54) **A SKIRT MEMBER FOR USE IN A FLASHING FOR A ROOF PENETRATING STRUCTURE AND A METHOD FOR MAKING A SKIRT MEMBER**
SCHÜRZENELEMENT ZUR VERWENDUNG IN EINER ABDICHTUNG FÜR EINE DACHDURCHDRINGENDE STRUKTUR UND VERFAHREN ZUR HERSTELLUNG EINES SCHÜRZENELEMENTS
ÉLÉMENT DE JUPE DESTINÉ À ÊTRE UTILISÉ DANS UN SOLIN POUR UNE STRUCTURE DE PÉNÉTRATION DE TOIT ET PROCÉDÉ DE FABRICATION D'UN ÉLÉMENT DE JUPE

(30) Priority: 09.07.2020 DK PA202000829
(43) Date of publication of application: 12.01.2022
(73) Proprietor: VKR Holding A/S, 2970 Hørsholm (DK)
(72) Inventor: ØSTERGAARD, Leif Schack, 2970 Hørsholm (DK)
(74) Representative: AWA Denmark A/S

(56) References cited:
- EP-A1- 1 606 470
- EP-A1- 2 749 707
- EP-B1- 0 123 141
- WO-A1-99/13180
- DE-A1- 3 603 303
- JP-A- H0 953 305

## Description

The present invention relates to a skirt member for use in a flashing for a roof penetrating structure, said skirt member being intended to be placed on an exterior roof surface in the mounted state and having two sides, a first side intended for facing the exterior roof surface and a second opposite side intended for facing outwardly, said skirt member comprising a first edge intended to be arranged at the roof penetrating structure, a second edge opposite the first edge and intended to rest on the exterior roof surface and two side edges extending between the first and second edges, and said skirt member comprising an exterior cover layer defining the second side and a shape stabilizing portion extending along an interior side of the exterior cover layer. The invention further relates to a method for making a skirt member.

Skirt flashing elements are used for sealing joints between building structures penetrating a roof surface and the roof surface, for example a joint between the frame of a roof window and the surrounding roofing material, particularly at the lower horizontal member of the stationary frame of roof windows. A skirt element typically comprises a plate or rail element to be attached to the roof penetrating structure and a skirt member attached to the rail element and adapted for being placed on the exterior surface of the roofing material. The skirt member is important with regard to ensuring a well-fitting, stable and secure sealing of the joint between a roof penetrating structure and a roof surface, particularly when the exterior roof surface is formed by an undulated roofing material, such as tiles. The skirt member is mounted so that it fits closely with the roof surface, at least at the second edge, and should stay in this position for the entire lifetime of the flashing. To achieve this, the skirt member is made of a material, which is easy to bend, preferably by hand, and which has a relatively high weight and a low elasticity. It is noted that the indication that the indication that the second edge is intended to rest on the exterior roof surface does not necessary mean that it is in tight contact with the exterior roof surface over the entire length of the skirt member, only that a close fit intended. As an example, irregularities in the shape of the roofing tiles of a tile roof and the small gaps often present between neighbouring tiles will usually mean that small sections of the second edge of the skirt member will not be in contact with the exterior roof surface.

Skirt members have traditionally been made from lead plates with a thickness of approximately 1 mm. Lead as a flashing material has a number of advantages as it is not too difficult to form by hand or hand tool and with only a very limited elasticity, i.e. the lead plate substantially stays in the shape into which it is initially bend without any elastic bouncing back. This inherent feature of lead is of great advantage when a lead skirt is shaped directly onto for example an undulated roof surface, since such skirt members do not have to be bent in excess in order to compensate for possible elastic re-bouncing. Although lead is virtually non-elastic, there may be a minimal re-bouncing, but as it has a high density, gravity will help keep the lead-skirt in close contact with the roof surface. The relatively high weight also prevents the skirt from being lifted and bent backwards by heavy winds. Lead, however, is environmentally harmful and has therefore been forbidden for use in construction work in many countries.

Some skirt members for roof applications are furthermore known from DE3603303 and JP H09 53305 A.

Different kinds of skirt members having a sandwich structure with a stress damping and stabilizing core layer of a ductile material covered by a foil sheeting have been widely used as alternatives to lead. The core layer has typically been made from a polymeric material or a bitumen product, and the foil has typically been a thin metal foil, preferably aluminium foil, as described for example in WO01/65029.

For use on roof surfaces in the form of undulated tiles with very deep troughs these sandwich structures are typically wave-corrugated or pleated giving them a surplus of material, which allows them to stretch so that a good fit between the skirt member and the roofing may be obtained.

Practice, however, has shown that skirt flashing elements are not always mounted correctly, meaning that the deformation work needed for achieving a tight fit between the skirt member and the roofing material is not always completed correctly. This results in gaps between the roofing material and the skirt member, which again results in a risk of rain water or snow finding its way into the roof structure and in an increased risk of the skirt member being lifted from the roof during heavy winds or wind gust.

As also described in WO01/65029, the skirt member may be made with an adhesive core layer and no foil sheeting on the first side, i.e. the side facing the roofing material and the interior of the building in the mounted state. In this way the core layer adheres to the roofing material and thus contributes to a tighter fit, but the lifetime of such skirt members is relatively short due to the exposure of the core layer.

Still another alternative, where a metal grid is covered with an elastomeric material on both sides, is described in WO95/31620. This skirt member has the advantage that the amount of metal is limited. Aluminium and other metals typically used in flashings undergo a cold deformation when the skirt member is bend back during mounting of the flashing, said cold deformation resulting in the material becoming more rigid or stiff and an increased elasticity and hence an increased tendency of the skirt to bounce back up, away from the roof. Polymers generally do not undergo such structural changes. However, the disadvantages with respect to deterioration described with reference to WO01/65029 also apply here and may be even more pronounced due to the second side being exposed to sunlight.

It is therefore the object of the invention to provide an improved skirt member, which is both durable and with a low tendency to bounce back up.

In a first aspect of the invention this is achieved with a skirt member according to claim 1, where the shape stabilizing portion comprises a plurality of elongate stiffening members made from an elastic material and extending adjacent to each other with a first end of each elongate stiffening member arranged at the first edge and a second end of each elongate stiffening member arranged at the second edge, a length of each elongate stiffening member extending from the first end to the second end.

The elongate stiffening members, which may extend substantially in parallel to each other, provide a resistance to bending about an axis extending in parallel to the first edge, and, as they are made from an elastic material, they will urge the second edge back towards the roof if it has been lifted either during installation or later during the life-time of the skirt member, for example due to wind pressure. Bending about an axis extending between the first and second edges, however, is only affected to a limited degree by the elongate stiffening members as they can move in relation to each other, for example allowing the skirt member to be stretched and follow the shape of an undulated roofing material.

While the elasticity caused by cold deformation in the prior art skirt members causes the skirt member to be forced upwards towards a bend back position into which it has been brought during installation, the elasticity of the elongate stiffening members causes the skirt member to be forced downwards as the elongate stiffening members try to regain their shape.

The fact that a first end of each elongate stiffening member is arranged at the first edge and a second end of each elongate stiffening member arranged is at the second edge does not entail that the length of the elongate stiffening members is necessarily equal to the distance between the first and second edges of the skirt member. It may for example be necessary to bend the material of the skirt member at the edges to make interconnect cover layers, to close off a space within the skirt member, to provide stiffness at the edge, and/or to avoid sharp edges. The presence of stiffening members could make such a bending difficult, and it is therefore preferred that sections of the skirt member at edges, which are to be bent, are left without stiffening members.

The elongate stiffening members may in principle be made from any elastic material which does not display any substantial cold-deformation, but polymers are presently considered advantageous due to their availability, low price, and durability. Thermoplastics have the advantage that they are easy to recycle and polyethylene (PE) is considered a promising material due to its high resistance to both moisture and temperature variations. Another group of material, which is considered promising is liquid crystal polymers. It is also contemplated to use composites, such as a polymer with a fibre reinforcement. The use of spring steel and like metals is also contemplated.

At least some of the elongate stiffening members are pre-tensioned so that they will further resist a bending of the skirt member causing the second edge to move towards the exterior when the skirt member is in a mounted state. This may for example be achieved by making the elongate stiffening members with a bend towards the first side before connecting them to other parts of the skirt member. When straightening the elongate stiffening members to arranged them in adjacent to the exterior cover layer during manufacture of the skirt member, a tension will be created in each elongate stiffening member, which will try to revert to its original shape. This tensioning will both result in the skirt member pressing against the exterior roof surface in the mounted state and in that the resistance of the skirt member against being lifted from the exterior roof surface will be stronger than if the elongate stiffening members had not been pre-tensioned.

It is presently considered advantageous that the bend on the elongate stiffening members is provided about half way between the first and second ends as this will provide uniform bending properties to the skirt member. It is, however, also possible to provide the bend closer to the first or the second edge thereby providing different bending properties on either side of the bend, and/or to use elongate stiffening members with different positions of the bend in the same skirt member.

A bend on the elongate stiffening members may also allow the formation of a space between the exterior roof surface and first side of the skirt member while the second edge remains resting on the exterior tile surface. Such a space has been proven to reduce the risk of water penetrating into the roof structure under the influence of wind by serving as a pressure relief chamber.

The elongate stiffening members may be interconnected at their first ends thereby forming a comb-like structure, where first ends are fixed and where the elongate stiffening members extend as adjacent teeth with free second ends, said structure constituting a stabilizing member. This facilitates handling of the elongate stiffening members during manufacture of the skirt member and only has a limited influence on the deformability of the skirt member as the first edge will usually be connected to a rail member of a skirt element. The connection to the rail member will mean that the first edge is fixated and that deformation of the section of the skirt member closest to the first edge and the rail member is minimal. Skirt members are often provided with a hinge deformation extending in parallel to the rail member, said hinge deformation serving as a hinge when bending the skirt member upwards during installation, thus hindering undesired deformation at other sections of the skirt member. Such a hinge deformation may constitute the first edge of the skirt member within the meaning of the present invention as the shape stabilization provided by the elongate stiffening members may only be needed at the section of the skirt element extending over the roofing material. In other words, an additional skirt section may be provided between the skirt member and the rail member, extending between the hinge deformation and the rail member.

The elongate stiffening members may in principle be any having sufficient strength and elasticity to stabilize the shape of the skirt member, including fibres, strands, thread, wires, strings, and rods, e.g. thin, flat, square or round, and all elongate stiffening members do not need to have the same dimensions. It may for example be advantageous to use elongate stiffening members of different lengths in order to achieve different elasticity in different sections of the skirt member. A similar effect may be achieved by using elongate stiffening members, where the thickness varies over the length. Likewise, it is possible to use elongate stiffening members made from a combination of materials or from composites with varying elasticity over the length.

In one embodiment the elongate stiffening members are lamellas having a width extending substantially in parallel with the exterior cover layer perpendicular to the length and a height extending substantially perpendicular to the exterior cover layer, said width being larger than said height. Compared to string- or rod-like elongate stiffening members, lamellas will have an increased stiffness.

The lamellas may be overlapping when seen in a direction perpendicular to the second side, either with the edge of one being overlapped by the next lamella and so on, or by lamellas of a first layer being arranged side-by-side and lamellas of a second layer covering the spaces and/or joint lines between the lamellas of the first layer. At present the latter of these two embodiments is considered advantageous as it provides uniform bending resistance, allows the individual lamellas to move relatively freely in relation to each other, and provides a high resistance to bending due to the two layers of lamellas. The lamellas of the two layers may have different elasticity, length, width and/or height to provide the skirt member with desired properties.

In one embodiment at least some of the lamellas are interconnected by a web made from an elastic or plastic material so that the lamellas are still substantially free to move in relation to each other, but together form a continuous unit. This may for example make the lamellas easier to handle during manufacture of the skirt member, but is may also allow these lamellas to serve as a cover layer of the skirt member. It may even be possible to replace the exterior cover layer with a set of thus interconnected lamellas. The material used for the web will depend on the position of the lamellas in the skirt member, but rubber or a textile, such as a non-woven made from polyethylene, are presently contemplated.

The skirt member may further comprise an interior layer, such as a cover layer, defining the interior first side of the skirt member, said shape stabilizing portion being sandwiched between the exterior cover layer and the interior layer. This provides a protection of the shape stabilizing portion and thus allows the elongate stiffening members to be made of one or more materials, which is/are for example not suitable for direct exposure to moisture.

The skirt member may further comprise a core layer having a density of at least 2.5 g/ml, thus combining the advantages of prior art skirt members with a heavy, ductile core layer and those provided by the use of the elongate stiffening members. Some or all of the elongate stiffening members may be embedded in the core layer, but some or all of the elongate stiffening members may also serve as an interior layer or cover layer.

In a second aspect of the invention the object is achieved with a method according to claim 9, namely a method for making a skirt member for use in a flashing for a roof penetrating structure, said skirt member being intended to be placed on an exterior roof surface in the mounted state and having two sides, a first side intended for facing the exterior roof surface and a second opposite side intended for facing outwardly, said skirt member comprising a first edge intended to be arranged at the roof penetrating structure, a second edge opposite the first edge and intended to rest on the exterior roof surface and two side edges extending between the first and second edges, and said skirt member comprising an exterior cover layer defining the second side and a shape stabilizing portion extending along an interior side of the exterior cover layer, wherein the method comprises the steps of:
arranging a plurality of elongate stiffening members made from an elastic material so that they extend adjacent to each other, and
connecting the elongate stiffening members to an exterior cover layer so that a first end of each elongate stiffening member is arranged at the first edge and a second end of each elongate stiffening member arranged at the second edge, a length of each elongate stiffening member extending from the first end to the second end, where at least some of the elongate stiffening members are pre-tensioned so that they will resist a bending of the skirt member causing the second edge to move towards the exterior when the skirt member is in a mounted state.

An edge of the exterior cover layer may be bent around the first ends of the elongate stiffening members and pressed flat so that the elongate stiffening members are retained by friction, Alternatively or as a supplement the elongate stiffening members may be connected indirectly to the exterior cover layer for example using an adhesive or a ductile material, possibly allowing the elongate stiffening members to move slightly in relation to the exterior cover layer and/or to each other. When using and adhesive or a ductile material, the elongate stiffening members do not have to be connected to the exterior cover layer over their entire length. On the contrary, it may be advantageous that they are connected only at the first edge. All elongate stiffening members do not have to be connected to the exterior cover layer in the same way. Specifically, when the elongate stiffening members are arranged in two or more layers as described with reference to the lamellas above, elongate stiffening members of one layer may connected to the exterior cover layer, while the elongate stiffening members of the other layer(s) are connected to the elongate stiffening members of the one layer and/or to each other.

The advantages and embodiments described with reference to the first aspect of the invention also applies the second aspect of the invention and vice versa unless otherwise stated.

The method may further include the step of interconnecting the elongate stiffening members at their first ends thereby forming a comb-like structure with free second ends, which will allow all of the elongate stiffening members to be handled as one unit during manufacture of the skirt member.

If using connected elongate stiffening members the method may further include the step of interrupting the connection between the first ends of the elongate stiffening members after the elongate stiffening members have been connected to the exterior cover layer, for example by cutting off the interconnected ends leaving only the parts of the elongate stiffening members, which are not interconnected. This will release the elongate stiffening members from each other, thereby potentially increasing the deformability in parallel with the first edge. Connecting or releasing the elongate stiffening members from each other may be done in connection with the formation of a hinge deformation as described above.

Elongate stiffening members, which are connected to each other at one or both ends may be manufactured by making a plate-shaped member, for example by extrusion, and then slicing it, but is it also possible to make individual elongate stiffening members, which are subsequently interconnected. The latter method is particularly advantageous if using elongate stiffening members made from different materials.

In one embodiment at least some of the elongate stiffening members are provided with a bend towards the first side before being connected to other parts of the skirt member, said bend preferably being provided about half way between the first and second ends. As describe above, these bends will provide a pre-tensioning of the skirt member. When using a thermoplastic material, the bends can be made by locally softening the material by applying heat, bending the elongate stiffening members, and then allowing them to cool. Alternatively, a plate-shaped member with a bend may be made by extrusion and when sliced in a direction substantially perpendicular to the direction of extrusion.

As mentioned above with reference to the first aspect of the invention, the elongate stiffening members may be interconnected using an elastic or plastic web material. The web material may for example be attached to the elongate stiffening members by welding, adhesive, glue, sewing, or coextrusion.

To protect the shape stabilizing portion, the method may further include the step of applying an interior cover layer so that the shape stabilizing portion is sandwiched between the exterior cover layer and the interior cover layer.

It is also possible to apply a core layer between the exterior cover layer and the elongate stiffening members and/or between an interior layer and the elongate stiffening members in order to optimise the performance of the shape stabilizing portion, said core layer forming part of the shape stabilizing portion.

In the following the invention will be described in further detail with reference to the drawing, where
Fig. 1 is sketch in a perspective view of the lower parts of a roof window mounted in an inclined roof structure,
Fig. 2 is a sketch in a perspective view of the left half of a skirt flashing element,
Fig. 3 is a sketch in a cross-sectional view of a skirt flashing element,
Fig. 4 is a sketch in a cross-sectional view of a skirt member,
Fig. 5 is a sketch in a perspective view of a first embodiment of a stabilizing member for use in a skirt member,
Fig. 6 is a sketch in a cross-sectional view of a stabilizing member mounted at a roof window,
Fig. 7 is a sketch in a side view of a skirt flashing element mounted at a roof window installed in a roof structure,
Fig. 8 shows a second embodiment of a stabilizing member in a front view and in an end view,
Fig. 9 shows a third embodiment of a stabilizing member in a front view and in an end view,
Fig. 10 shows a fourth embodiment of a stabilizing member in a front view and in an end view, and
Fig. 11 shows an end view of the stabilizing member in Fig. 8 in a mounted state.

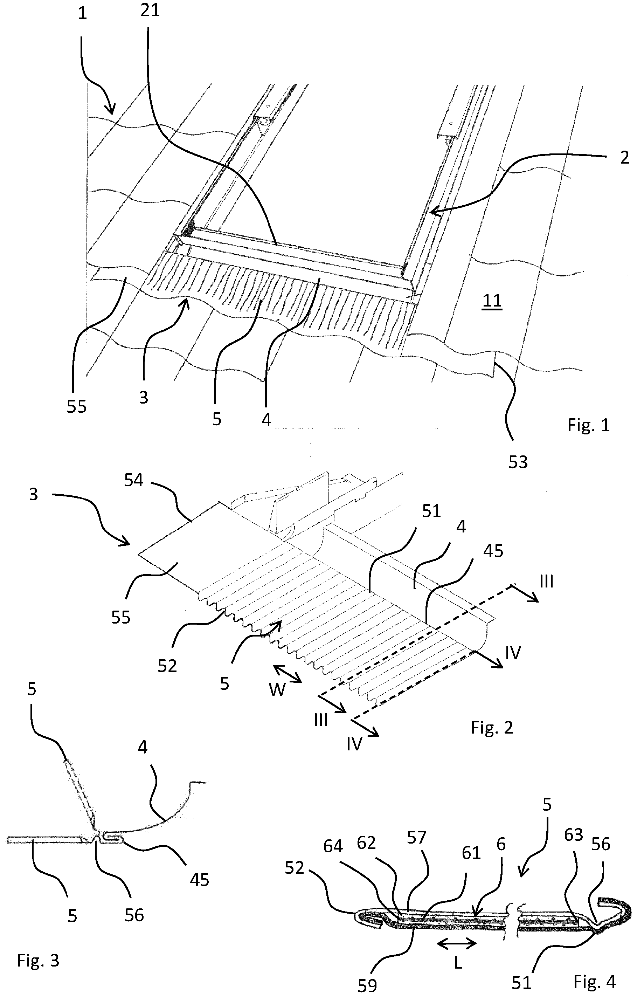

A roof structure 1 with a roof penetrating structure in the form of a frame 2 for a roof window is shown in Fig. 1. A skirt flashing element 3 is arranged with a rail member 4 attached to a bottom frame member 21 of the roof window frame and a skirt member 5 projecting over an exterior roof surface of the roof structure. In this case the roofing constituting the exterior roof surface of the roof structure is tiles 11 and the exterior roof surface is therefore undulated, but the skirt flashing element could also be used with other types of roofing, such as slate or roofing sheets.

Referring now also to Fig. 2, which shows the left half of the skirt flashing element 3 in an undeformed state, the skirt member 5 comprises a first edge 51 connected to the rail member 4 and arranged at the roof penetrating structure in the mounted state. A second edge 52 of the skirt member 5 opposite the first edge is resting on the exterior roof surface in the mounted state and two side edges 53, 54 extend between the first and second edges. In this embodiment the skirt member comprises two end sections 54, which are extending underneath the tiles at either side of the roof window frame 2. These end sections are not related to the present invention and will therefore not be described in further detail here. The same applies to the details of the rail member 4, which will be known to the skilled person.

It is noted that the same reference numbers are used in figures for features having substantially the same function, even though they are not necessarily identical.

The joint between the rail member 4 and the skirt member 5 may be embodied as shown in Fig. 3, which correspond to a cross-section along the line III-III in Fig. 2, but showing a different size ratio between the rail member 4 and the skirt member 5 and details of the joint. Both the rail member and the skirt member are provided with bent edges, which hook into each other, thereby forming the joint 45 between the two members. The joint may be fixated, for example by being flattened, or by adding a glue or an adhesive.

As is also seen in Fig. 3 the skirt member 5 is provided with a groove 56 extending in parallel to the rail member over the entire width W of the skirt member. This groove serves as a hinge deformation allowing a controlled bending of the skirt member when moving it from the position shown in full lines to the position shown in broken lines during installation of the skirt flashing member 3.

Turning now to Fig. 4 a cross-section corresponding to a cross-section along the line IV-IV in Fig. 2 but showing a somewhat more complex skirt member 5 is shown. This skirt member comprises an exterior cover layer 57 defining a second side intended for facing outwardly in the mounted state, and an interior cover layer 59 defining an interior first side intended for facing the exterior roof surface in the mounted state. Sandwiched between the exterior cover layer 57 and the interior cover layer 59 is a shape stabilizing portion 6 here consisting of a plurality of elongate stiffening members 61 and a core layer 62. The core layer will typically be made from a plastic material, such as for example a bitumen admixed with heavy particles so that it has a density of at least 2.5 g/ml. Such core layers are well known from prior art skirt members and will therefore not be described in further detail here.

In this embodiment the elongate stiffening members 61 are embedded in the core layer 62, but they may also be provided on top of it or underneath it so that they are in contact with the exterior cover layer 57 or the interior cover layer 59, respectively. Embodiments without a core layer 62 are also possible, but it is the considered advantageous to provide some other means for keeping the elongate stiffening members 61 in their intended position within the skirt member 5. Likewise, it is possible to make the skirt member without an interior cover layer 59.

The elongate stiffening members 61 are made from an elastic material and extend adjacent and substantially in parallel to each other, so only one can be seen in Fig. 4. A first end 63 of each elongate stiffening member is arranged at the first edge 51, which is here defined by a hinge deformation 56 as described above, and a second end 64 of each elongate stiffening member is arranged at the second edge 52. As may be seen, the length of the elongate stiffening members 61 is somewhat shorter than the distance between outer surfaces of the skirt member at the first and second edges 51, 52 when seen in the length direction L. This is to avoid them being deformed or fixated by the groove defining the first edge 51 or by the bends on the cover layers 57, 59 at the second edge 52. It would, however, be possible to achieve an indirect interconnection of the elongate stiffening members at the first edge by making them extend further towards the groove 56 so that they were fixated between the two cover layers at the groove.

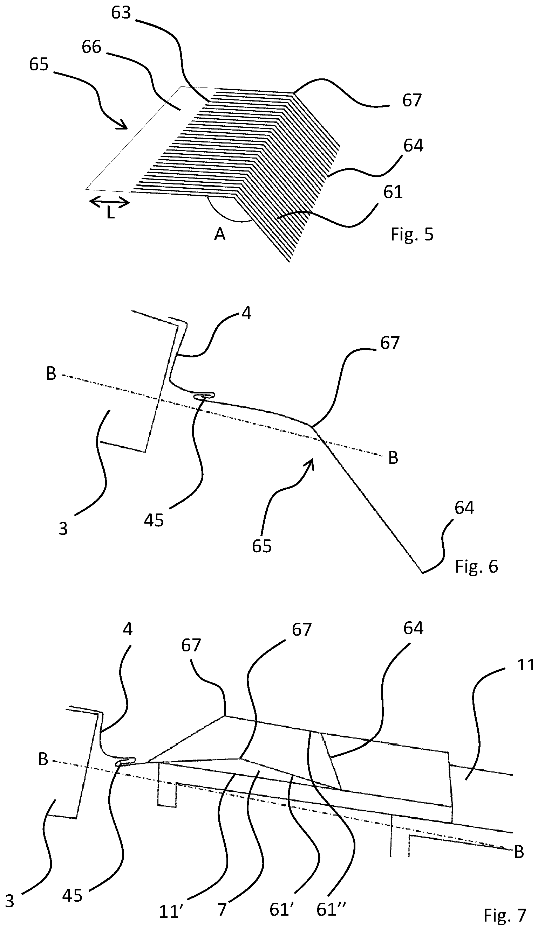

Fig. 5 shows a stabilizing member 65 consisting of a plurality of elongate stiffening members 61, which are interconnected by all being connected to a beam 66 thereby forming a comb-like structure. The beam is intended to extend along the first edge 51 of the skirt member, while the free second ends 64 will be located that the second edge of the skirt member 52. The stiffening members 61 may be connected to the beam, for example by welding or gluing, but it is also possible to make them in one, for example by cutting slits into a sheet material, thereby creating a comb-like structure.

The stabilizing member 65 may be embedded in a core layer 62 as described with reference to Fig. 4, but it is also possible to attach the beam 66 to the exterior cover layer 57 and/or to the interior cover layer 59 in which case the core layer may not be needed.

In the embodiment in Fig. 5 the elongate members are provided with a bend 67 substantially midway between the beam 66 and the second ends 64. The bend 67 in combination with the fact that at least the elongate stiffening members 61 are made from an elastic material provides a pre-tensioning, which will counter-act a bending of the skirt member 5 about an axis extending in parallel with the beam 66 and hence the first edge 51 of the skirt member. Different positions of the bend 67 will provide different bending properties of the skirt member.

A sketch showing the stabilizing member 65 of Fig. 5 connected to a rail member 4 and attached to a roof window frame 3 is shown in Fig. 6. The dash-dotted line B-B illustrates the centre plane of the roof window frame, which is parallel to the plane of the inclined roof structure, in which it is mounted. As may be seen, the free second ends 64 of the elongate stiffening members of the stabilizing member 65, which is here in an undeformed state, project below the centre plane of the roof window frame.

Turning now to Fig. 7 the stabilizing member 65 is shown mounted on top of a roof tile 11 such that it has been pressed upwards above the centre plane B-B of the roof window frame. Some of the elongated stiffening members, here represented by one marked 61', are located at the valleys, where the roof tiles lie close against the load-bearing structure of the roof structure, while others, here represented by one marked 61", are located at the highs, where the roof tiles project the most above the load-bearing structure of the roof structure. The bend 67 of the stabilizing members is located such that the deformation of the elongated stiffening members 61" located at the highs are deformed only at the first ends closest to the beam. As for the elongated stiffening members 61' located at the valleys on the other hand the angle A of the bend 67 has been reduced considerably. As the elongated stiffening members are made from an elastic material, they will try to revert to their original shape shown in Fig. 6 and this results in the free second ends 64 pressing downwards against the roof tiles, thereby forcing the entire skirt member down and keeping it in contact with the exterior roof surface.

As may also be seen from Fig. 7, the bend 67 on the elongate stiffening members 61 entails that a space 7 is formed between the elongate stiffening members and the upper side 11' of tile at valley. A similar but smaller space may be formed at the highs of the roofing. The second ends 64 of all elongate stiffening members remain close to the tiles so that the entire second edge 52 of the skirt member 5 will remain flush with the exterior tile surface. In this way a space is formed between the exterior roof surface and the first side of the skirt member 5, which may serve as a pressure relief chamber.

In Fig. 5 the stiffening members 61 are embodied at rods or threads, which allows them to bend also in the transversal direction, which may contribute to the deformability of the skirt member, but other shapes are also possible.

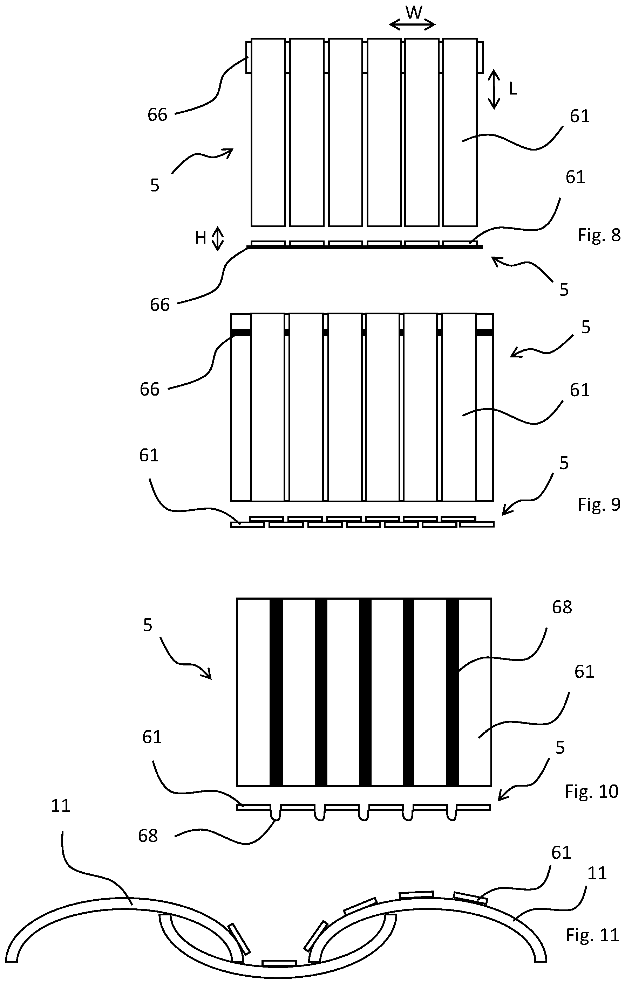

Fig 8-11 show embodiments, where the stiffening members 61 are lamellas having a width in parallel with the width W of the skirt member which is considerably larger than their height H. Figs 8-10 each show the skirt member 5 seen both from an exterior second side (at the top) and from a side in parallel with the length direction L (at the bottom).

In Fig. 8 each of the lamellas 61 is connected to a band of material serving substantially the same purpose as the beam 66 described above with reference to Fig. 5. Whereas the structure shown in Fig. 5 is particularly well suited for being made in one by cutting into a sheet material, the structure in Fig. 8 is well suited for situations, where it is desired to make the elongate stiffening members 61 from a different material than the beam 66. It may for example be desired to make the lamellas serving as the elongate stiffening members from a sheet polymer and to make the beam from a textile to provide it with a high flexibility.

The skirt member 5 in Fig. 9 comprises two layers of lamellas 61 arranged on top of each other such that lamellas are overlapping when seen in a direction perpendicular to the second side. This provides an even more uniform resistance to bending and may even allow the lamellas to be exposed so that the skirt member can be made without an interior cover layer. In this embodiment a strip 66' of an adhesive has taken the place of the beam described above. It interconnects the lamellas so that a comb-like structure is formed but provides no substantial structural strength or stiffness itself.

In the embodiment in Fig. 10 there is no beam. Instead the lamellas are interconnected along the entire length by a web 68. This means that an uninterrupted unit is formed which may be impermeable to wind and/or water, thereby potentially eliminating the need for cover materials entirely. The webs 68 may be made from an elastic material, such as rubber, and/or be made with a surplus of material as shown in Fig. 10 so that the lamellas 61 can move in relation to each other.

Fig. 11 shows the lamellas of the embodiment in Fig. 8 and/or 10 arranged against roof tiles 11. As may be seen, the mutual distance between the lamellas 61 are somewhat increased by some of the them having come to rest on top of a tile while others have been arranged in a valley between tiles. If the skirt member includes one or more cover layers and/or a core layer, these should be able to allow and/or compensate for this mutual movement of the lamellas. For this reason, cover layers will often be pleated or corrugated or otherwise provided with a surplus of material and core layers will often be plastic in deformation.

If using less wide lamellas or string-like stiffening members 61 as describe with reference to Figs 5-7 the relative mutual displacement between the stiffening members will be less, but the total expansion needed to adapt to the shape of the roofing will be the same.

### List of reference numbers

- 1: Roof structure
- 11: Tile
- 11': Upper side of tile at valley
- 2: Frame
- 21: Bottom frame member
- 3: Skirt flashing element
- 4: Rail member
- 45: Joint
- 5: Skirt member
- 51: First edge
- 52: Second edge
- 53: Side edge
- 54: Side edge
- 56: Groove
- 57: Exterior cover layer
- 59: Interior cover layer
- 6: Shape stabilizing portion
- 61: Elongate stiffening members
- 61': Elongate stiffening member
- 61": Elongate stiffening member
- 62: Core layer
- 63: First end
- 64: Second end
- 65: Stabilizing member
- 66: Beam
- 66': Strip
- 67: Bend
- 68: Web
- 7: Space below skirt member

## Claims

1. A skirt member (5) for use in a flashing for a roof penetrating structure (2), said skirt member being intended to be placed on an exterior roof surface in the mounted state and having two sides, a first side intended for facing the exterior roof surface and a second opposite side intended for facing outwardly, said skirt member comprising a first edge (51) intended to be arranged at the roof penetrating structure, a second edge (52) opposite the first edge and intended to rest on the exterior roof surface and two side edges (53, 54) extending between the first and second edges, and said skirt member comprising an exterior cover layer (57) defining the second side and a shape stabilizing portion (6) extending along an interior side of the exterior cover layer, wherein the shape stabilizing portion (6) comprises a plurality of elongate stiffening members (61, 61', 61") made from an elastic material and extending adjacent to each other with a first end (63) of each elongate stiffening member arranged at the first edge (51) and a second end (64) of each elongate stiffening member arranged at the second edge (52), a length of each elongate stiffening member extending from the first end to the second end, **characterized in that** at least some of the elongate stiffening members (61, 61', 61") are pre-tensioned so that they will resist a bending of the skirt member causing the second edge (52) to move towards the exterior when the skirt member is in a mounted state.

2. A skirt member (5) according to claim 1, where the elongate stiffening members (61, 61', 61") are interconnected at their first ends (63) thereby forming a comb-like structure with free second ends (64).

3. A skirt member (5) according to one or more of the preceding claims, where the elongate stiffening members (61, 61', 61") are lamellas having a width extending substantially in parallel with the exterior cover layer (57) perpendicular to the length and a height extending substantially perpendicular to the exterior cover layer, said width being larger than said height.

4. A skirt member (5) according to claim 3, lamellas are overlapping when seen in a direction perpendicular to the second side.

5. A skirt member (5) according to claim 4, where lamellas are arranged in two layers, where the lamellas of a first layer are arranged side-by-side and where the lamellas of a second layer cover the spaces and/or joint lines between the lamellas of the first layer.

6. A skirt member (5) according to one or more of claims 3-5, where at least some of the lamellas are interconnected by a web (68) made from an elastic or plastic material.

7. A skirt member (5) according to one or more of the preceding claims, further comprising an interior layer (59) defining the interior first side of the skirt member, said shape stabilizing portion (6) being sandwiched between the exterior cover layer (57) and the interior layer.

8. A skirt member (5) according to one or more of the preceding claims, further comprising a core layer (62), preferably having a density of at least 2.5 g/ml, and where at least some of the elongate stiffening members (61, 61', 61") are embedded in the core layer.

9. A method for making a skirt member (5) for use in a flashing for a roof penetrating structure (2), said skirt member being intended to be placed on an exterior roof surface in the mounted state and having two sides, a first side intended for facing the exterior roof surface and a second opposite side intended for facing outwardly, said skirt member comprising a first edge (51) intended to be arranged at the roof penetrating structure, a second edge (52) opposite the first edge and intended to rest on the exterior roof surface and two side edges (53, 54) extending between the first and second edges, and said skirt member comprising an exterior cover layer (57) defining the second side and a shape stabilizing portion (6) extending along an interior side of the exterior cover layer,
the method comprising the steps of:
arranging a plurality of elongate stiffening members (61, 61', 61") made from an elastic material so that they extend adjacent to each other, and
connecting the elongate stiffening members (61, 61', 61") to an exterior cover layer (57) so that a first end (63) of each elongate stiffening member is arranged at the first edge (51) and a second end (64) of each elongate stiffening member arranged at the second edge (52), a length of each elongate stiffening member extending from the first end to the second end,
where at least some of the elongate stiffening members (61, 61', 61") are pre-tensioned so that they will resist a bending of the skirt member causing the second edge (52) to move towards the exterior when the skirt member is in a mounted state.

10. A method according to claim 9, further including the step of:
interconnecting the elongate stiffening members (61, 61', 61") at their first ends (63) thereby forming a comb-like structure with free second ends (64) and/or
interrupting a connection between the first ends (63) of the elongate stiffening members (61, 61', 61") after the elongate stiffening members have been connected to the exterior cover layer (57).

11. A method according to claim 9 or 10, where at least some of the elongate stiffening members (61, 61', 61") are provided with a bend (67) towards the first side before being connected to other parts of the skirt member (5), said bend preferably being provided about half way between the first and second ends (64).

12. A method according to one or more of claims 9 to 11, further including the step of:
Interconnecting elongate stiffening members (61, 61', 61") using an elastic or plastic web material (68) and/or embedding them in a core layer.

13. A method according to one or more of claims 9 to 12, further including the step of:
applying an interior layer so that the shape stabilizing portion (6) is sandwiched between the exterior cover layer (57) and the interior layer and/or applying a core layer (62) between the exterior cover layer and the elongate stiffening members (61, 61', 61") and/or between an interior layer (59) and the elongate stiffening members.

## Patentansprüche

1. Schürzenelement (5) zur Verwendung in einer Verblechung für eine dachdurchdringende Struktur (2), wobei das Schürzenelement dazu bestimmt ist, im montierten Zustand auf einer äußeren Dachfläche platziert zu sein, und zwei Seiten aufweist, wobei eine erste Seite dazu bestimmt ist, zur äußeren Dachfläche zu weisen, und eine zweite gegenüberliegende Seite dazu bestimmt ist, nach außen zu weisen, wobei das Schürzenelement eine erste Kante (51), die dazu bestimmt ist, an der dachdurchdringenden Struktur angeordnet zu sein, eine zweite Kante (52), die der ersten Kante gegenüberliegt und dazu bestimmt ist, auf der äußeren Dachfläche aufzuliegen, und zwei Seitenkanten (53, 54), die sich zwischen der ersten und der zweiten Kante erstrecken, umfasst, und wobei das Schürzenelement eine äußere Abdeckschicht (57), die die zweite Seite definiert, und einen Formstabilisierungsabschnitt (6), der sich entlang einer inneren Seite der äußeren Abdeckschicht erstreckt, umfasst, wobei der Formstabilisierungsabschnitt (6) mehrere längliche Versteifungselemente (61, 61', 61") umfasst, die aus einem elastischen Material bestehen und sich angrenzend aneinander erstrecken, wobei ein erstes Ende (63) jedes länglichen Versteifungselements an der ersten Kante (51) angeordnet ist und ein zweites Ende (64) jedes länglichen Versteifungselements an der zweiten Kante (52) angeordnet ist, wobei sich eine Länge jedes länglichen Versteifungselements von dem ersten Ende zu dem zweiten Ende erstreckt, **dadurch gekennzeichnet, dass** zumindest einige der länglichen Versteifungselemente (61, 61', 61") vorgespannt sind, so dass sie einer Biegung des Schürzenelements widerstehen, wodurch bewirkt wird, dass sich die zweite Kante (52) zur Außenseite hin bewegt, wenn sich das Schürzenelement in einem montierten Zustand befindet.

2. Schürzenelement (5) nach Anspruch 1, wobei die länglichen Versteifungselemente (61, 61', 61") an ihren ersten Enden (63) miteinander verbunden sind, wodurch eine kammartige Struktur mit freien zweiten Enden (64) gebildet ist.

3. Schürzenelement (5) nach einem oder mehreren der vorhergehenden Ansprüche, wobei die länglichen Versteifungselemente (61, 61', 61") Lamellen sind, die eine Breite, die sich im Wesentlichen parallel zur äußeren Abdeckschicht (57) senkrecht zur Länge erstreckt, und eine Höhe, die sich im Wesentlichen senkrecht zur äußeren Abdeckschicht erstreckt, aufweisen, wobei die Breite größer als die Höhe ist.

4. Schürzenelement (5) nach Anspruch 3, wobei sich Lamellen bei Ansicht in einer Richtung senkrecht zur zweiten Seite überlappen.

5. Schürzenelement (5) nach Anspruch 4, wobei Lamellen in zwei Schichten angeordnet sind, wobei die Lamellen einer ersten Schicht nebeneinander angeordnet sind und wobei die Lamellen einer zweiten Schicht die Zwischenräume und/oder Verbindungslinien zwischen den Lamellen der ersten Schicht bedecken.

6. Schürzenelement (5) nach einem oder mehreren der Ansprüche 3-5, wobei zumindest einige der Lamellen durch eine Bahn (68) aus einem elastischen oder plastischen Material miteinander verbunden sind.

7. Schürzenelement (5) nach einem oder mehreren der vorhergehenden Ansprüche, ferner umfassend eine innere Schicht (59), die die innere erste Seite des Schürzenelements definiert, wobei der Formstabilisierungsabschnitt (6) zwischen der äußeren Abdeckschicht (57) und der inneren Schicht sandwichartig angeordnet ist.

8. Schürzenelement (5) nach einem oder mehreren der vorhergehenden Ansprüche, ferner umfassend eine Kernschicht (62), die vorzugsweise eine Dichte von mindestens 2,5 g/ml aufweist, und wobei zumindest einige der länglichen Versteifungselemente (61, 61', 61") in die Kernschicht eingebettet sind.

9. Verfahren zur Herstellung eines Schürzenelements (5) zur Verwendung in einer Verblechung für eine dachdurchdringende Struktur (2), wobei das Schürzenelement dazu bestimmt ist, im montierten Zustand auf einer äußeren Dachfläche platziert zu sein, und zwei Seiten aufweist, wobei eine erste Seite dazu bestimmt ist, zur äußeren Dachfläche zu weisen, und eine zweite gegenüberliegende Seite dazu bestimmt ist, nach außen zu weisen, wobei das Schürzenelement eine erste Kante (51), die dazu bestimmt ist, an der dachdurchdringenden Struktur angeordnet zu sein, eine zweite Kante (52), die der ersten Kante gegenüberliegt und dazu bestimmt ist, auf der äußeren Dachfläche aufzuliegen, und zwei Seitenkanten (53, 54), die sich zwischen der ersten und der zweiten Kante erstrecken, umfasst, und wobei das Schürzenelement eine äußere Abdeckschicht (57), die die zweite Seite definiert, und einen Formstabilisierungsabschnitt (6), der sich entlang einer inneren Seite der äußeren Abdeckschicht erstreckt, umfasst,
wobei das Verfahren die folgenden Schritte umfasst:
Anordnen mehrerer länglicher Versteifungselemente (61, 61', 61") aus einem elastischen Material so, dass sie sich aneinander angrenzend erstrecken, und
Verbinden der länglichen Versteifungselemente (61, 61', 61") mit einer äußeren Abdeckschicht (57), so dass ein erstes Ende (63) jedes länglichen Versteifungselements an der ersten Kante (51) angeordnet ist und ein zweites Ende (64) jedes länglichen Versteifungselements an der zweiten Kante (52) angeordnet ist, wobei sich eine Länge jedes länglichen Versteifungselements von dem ersten Ende zu dem zweiten Ende erstreckt,
wobei zumindest einige der länglichen Versteifungselemente (61, 61', 61") vorgespannt sind, so dass sie einer Biegung des Schürzenelements widerstehen, wodurch bewirkt wird, dass sich die zweite Kante (52) zur Außenseite hin bewegt, wenn sich das Schürzenelement in einem montierten Zustand befindet.

10. Verfahren nach Anspruch 9, ferner umfassend den folgenden Schritt:
Verbinden der länglichen Versteifungselemente (61, 61', 61") an ihren ersten Enden (63) miteinander, wodurch eine kammartige Struktur mit freien zweiten Enden (64) gebildet wird, und/oder
Unterbrechen einer Verbindung zwischen den ersten Enden (63) der länglichen Versteifungselemente (61, 61', 61"), nachdem die länglichen Versteifungselemente mit der äußeren Abdeckschicht (57) verbunden wurden.

11. Verfahren nach Anspruch 9 oder 10, wobei zumindest einige der länglichen Versteifungselemente (61, 61', 61") mit einer Biegung (67) zur ersten Seite hin versehen werden, bevor sie mit anderen Teilen des Schürzenelements (5) verbunden werden, wobei die Biegung vorzugsweise etwa auf halber Strecke zwischen dem ersten und dem zweiten Ende (64) bereitgestellt wird.

12. Verfahren nach einem oder mehreren der Ansprüche 9 bis 11, ferner umfassend den folgenden Schritt:
Verbinden länglicher Versteifungselemente (61, 61', 61") miteinander unter Verwendung eines elastischen oder plastischen Bahnmaterials (68) und/oder Einbetten derselben in eine Kernschicht.

13. Verfahren nach einem oder mehreren der Ansprüche 9 bis 12, ferner umfassend den folgenden Schritt:
Aufbringen einer inneren Schicht, so dass der Formstabilisierungsabschnitt (6) zwischen der äußeren Abdeckschicht (57) und der inneren Schicht sandwichartig angeordnet wird, und/oder Aufbringen einer Kernschicht (62) zwischen der äußeren Abdeckschicht und den länglichen Versteifungselementen (61, 61', 61") und/oder zwischen einer inneren Schicht (59) und den länglichen Versteifungselementen.

## Revendications

1. Élément de jupe (5) destiné à être utilisé dans un solin pour une structure de pénétration de toit (2), ledit élément de jupe étant destiné à être placé sur une surface de toit extérieure à l'état monté et présentant deux côtés, un premier côté destiné à faire face à la surface de toit extérieure et un second côté opposé destiné à faire face à l'extérieur, ledit élément de jupe comprenant un premier bord (51) destiné à être disposé au niveau de la structure de pénétration de toit, un second bord (52) opposé au premier bord et destiné à reposer sur la surface de toit extérieure et deux bords latéraux (53, 54) s'étendant entre les premier et second bords, et ledit élément de jupe comprenant une couche de couverture extérieure (57) définissant le second côté et une partie stabilisatrice de forme (6) s'étendant le long d'un côté intérieur de la couche de couverture extérieure, la partie stabilisatrice de forme (6) comprenant une pluralité d'éléments raidisseurs allongés (61, 61', 61") fabriqués à partir d'un matériau élastique et s'étendant à proximité de l'un de l'autre, une première extrémité (63) de chaque élément raidisseur allongé étant disposée au niveau du premier bord (51) et une seconde extrémité (64) de chaque élément raidisseur allongé étant disposée au niveau du second bord (52), une longueur de chaque élément raidisseur allongé s'étendant de la première extrémité à la seconde extrémité, **caractérisé en ce qu'**au moins certains des éléments raidisseurs allongés (61, 61', 61") sont précontraints de sorte à résister à une flexion de l'élément de jupe entraînant le déplacement du second bord (52) vers l'extérieur lorsque l'élément de jupe est à l'état monté.

2. Élément de jupe (5) selon la revendication 1, les éléments raidisseurs allongés (61, 61', 61") étant reliés entre eux au niveau de leurs premières extrémités (63), formant ainsi une structure en forme de peigne avec des secondes extrémités libres (64).

3. Élément de jupe (5) selon une ou plusieurs des revendications précédentes, les éléments raidisseurs allongés (61, 61', 61") étant des lamelles ayant une largeur s'étendant sensiblement parallèlement à la couche de couverture extérieure (57) perpendiculairement à la longueur et une hauteur s'étendant sensiblement perpendiculairement à la couche de couverture extérieure, ladite largeur étant plus grande que ladite hauteur.

4. Élément de jupe (5) selon la revendication 3, les lamelles se chevauchant lorsqu'elles sont vues dans une direction perpendiculaire au second côté.

5. Élément de jupe (5) selon la revendication 4, les lamelles étant disposées en deux couches, les lamelles d'une première couche étant disposées côte à côte et les lamelles d'une seconde couche couvrant les espaces et/ou les lignes de jonction entre les lamelles de la première couche.

6. Élément de jupe (5) selon une ou plusieurs des revendications 3 à 5, au moins certaines des lamelles étant reliées entre elles par une bande (68) fabriquée à partir d'un matériau élastique ou plastique.

7. Élément de jupe (5) selon une ou plusieurs des revendications précédentes, comprenant en outre une couche intérieure (59) définissant le premier côté intérieur de l'élément de jupe, ladite partie stabilisatrice de forme (6) étant prise en sandwich entre la couche de couverture extérieure (57) et la couche intérieure.

8. Élément de jupe (5) selon une ou plusieurs des revendications précédentes, comprenant en outre une couche centrale (62), ayant de préférence une densité d'au moins 2,5 g/ml, et au moins certains des éléments de raidissement allongés (61, 61', 61") étant intégrés dans la couche centrale.

9. Procédé de fabrication d'un élément de jupe (5) destiné à être utilisé dans un solin pour une structure de pénétration de toit (2), ledit élément de jupe étant destiné à être placé sur une surface de toit extérieure à l'état monté et présentant deux côtés, un premier côté destiné à faire face à la surface de toit extérieure et un second côté opposé destiné à faire face à l'extérieur, ledit élément de jupe comprenant un premier bord (51) destiné à être disposé au niveau de la structure de pénétration de toit, un second bord (52) opposé au premier bord et destiné à reposer sur la surface de toit extérieure et deux bords latéraux (53, 54) s'étendant entre les premier et second bords, et ledit élément de jupe comprenant une couche de couverture extérieure (57) définissant le second côté et une partie stabilisatrice de forme (6) s'étendant le long d'un côté intérieur de la couche de couverture extérieure,
le procédé comprenant les étapes consistant à :
disposer une pluralité d'éléments de raidissement allongés (61, 61', 61") fabriqués à partir d'un matériau élastique de sorte qu'ils s'étendent à proximité l'un à l'autre, et
relier les éléments raidisseurs allongés (61, 61', 61") à une couche de couverture extérieure (57) de sorte qu'une première extrémité (63) de chaque élément raidisseur allongé soit disposée au niveau du premier bord (51) et qu'une seconde extrémité (64) de chaque élément raidisseur allongé soit disposée au niveau du second bord (52), la longueur de chaque élément raidisseur allongé s'étendant de la première extrémité à la seconde extrémité,
au moins certains des éléments raidisseurs allongés (61, 61', 61") étant précontraints de sorte à résister à une flexion de l'élément de jupe entraînant le déplacement du second bord (52) vers l'extérieur lorsque l'élément de jupe est à l'état monté.

10. Procédé selon la revendication 9, comprenant en outre les étapes consistant à :
relier entre eux les éléments raidisseurs allongés (61, 61', 61") au niveau de leurs premières extrémités (63), formant ainsi une structure en forme de peigne avec des secondes extrémités libres (64) et/ou
interrompre la liaison entre les premières extrémités (63) des éléments raidisseurs allongés (61, 61', 61") après que les éléments raidisseurs allongés ont été reliés à la couche de couverture extérieure (57).

11. Procédé selon la revendication 9 ou 10, au moins certains des éléments raidisseurs allongés (61, 61', 61") étant pourvus d'une courbure (67) vers le premier côté avant d'être reliés à d'autres parties de l'élément de jupe (5), ladite courbure étant de préférence située à peu près à mi-chemin entre les première et seconde extrémités (64).

12. Procédé selon une ou plusieurs des revendications 9 à 11, comprenant en outre l'étape consistant à :
relier entre eux les éléments raidisseurs allongés (61, 61', 61") à l'aide d'un matériau de bande élastique ou plastique (68) et/ou les intégrer dans une couche centrale.

13. Procédé selon une ou plusieurs des revendications 9 à 12, comprenant en outre l'étape consistant à :
appliquer une couche intérieure de sorte que la partie stabilisatrice de forme (6) soit prise en sandwich entre la couche de couverture extérieure (57) et la couche intérieure et/ou appliquer une couche centrale (62) entre la couche de couverture extérieure et les éléments raidisseurs allongés (61, 61', 61") et/ou entre une couche intérieure (59) et les éléments raidisseurs allongés.
